# EUROPÄISCHE PATENTSCHRIFT

(11) **EP 2 096 027 B1**
(45) Veröffentlichungstag und Bekanntmachung des Hinweises auf die Patenterteilung: **27.03.2013**
(21) Anmeldenummer: 09002007.4
(22) Anmeldetag: 13.02.2009
(51) Int. Cl.: B63G 8/30

(54) **Klappensteuerung**
Flap control
Commande de clapets

(30) Priorität: 01.03.2008 DE 102008011953
(43) Veröffentlichungstag der Anmeldung: 02.09.2009
(73) Patentinhaber: Gabler Maschinenbau GmbH, 23568 Lübeck (DE)
(72) Erfinder: Buck, Christian, 23611 Sereetz (DE); Steinhoff, Thorsten, 22043 Hamburg (DE); Thomä, Anton, 23554 Lübeck (DE)
(74) Vertreter: Vollmann, Heiko

(56) Entgegenhaltungen:
- EP-A1- 0 045 701
- EP-A1- 0 325 775
- EP-A1- 0 372 265
- EP-B1- 0 582 332
- DE-C1- 19 915 379
- GB-A- 2 234 789
- US-A- 2 503 748

## Beschreibung

Die Erfindung betrifft eine Klappensteuerung für ein Ausfahrgerät in einem Unterseeboot.

Insbesondere militärische Unterseeboote sind heutzutage mit einer Reihe von Ausfahrgeräten ausgestattet. Diese Ausfahrgeräte werden bei Bedarf aus im Bootsinneren befindlichen Schächten ausgefahren um aus getauchtem Zustand z. B. Information von über Wasser zu erhalten. Vor dem Ausfahren ist das Öffnen von Verschlussklappen in der Außenhaut erforderlich, die vorgesehen sind, um bei eingefahrenem Ausfahrgerät die Außenhaut möglichst bündig abzuschließen, insbesondere die Umströmung des Bootes in diesem Bereich möglichst wenig zu beeinträchtigen und damit die Signatur des Bootes gering zu halten.

Das Dokument DE-A-19915379 beschreibt die Merkmale des Oberbegriffs des Anspruchs 1.

Zweckmäßigerweise werden die Verschlussklappen durch die Aus- und Einfahrt des Ausfahrgerätes gesteuert. Hierzu hat eine Vorrichtung zur Klappensteuerung nach EP 0 582 332 B1 Eingang in den Stand der Technik gefunden. Allerdings weist diese bekannte Vorrichtung eine Reihe von Nachteilen auf: Zum einen wird in einer Vorrichtung nach dem Stand der Technik die Bewegung des Ausfahrgerätes in eine Querbewegung schachtseitig montierter Elemente übertragen, welche über ein Gestänge wieder in eine Hubbewegung längs des Schachts umgelenkt werden muss. Eine solche Gestängekonstruktion birgt ein hohes Risiko für Selbsthemmung und Verklemmungen des Gestänges, insbesondere bei Erschütterungen des Unterseeboots. Infolgedessen ist eine solche Klappensteuerung wenig geeignet, schockfest ausgestaltet zu werden, wie die bei militärischen Unterseebooten erforderlich ist.

Des Weiteren erfolgt bei einer Vorrichtung nach dem Stand der Technik eine sehr große Übersetzung der Bewegung des Ausfahrgerätes in eine Schwenkbewegung der Klappe. Damit haben geringe Änderungen der Ausfahrgeräteposition große Kräfte auf die Klappenanlenkungen zur Folge. Dies erweist sich als nachteilig für eine Absicherung bezüglich eines unbeabsichtigten Schwenkens der Klappe.

Zudem erlaubt bei einer Klappensteuerung nach dem Stand der Technik die Ankopplung des Ausfahrgerätes an das bewegungsvermittelnde Gestänge nur sehr wenig Spiel. Diese Anfälligkeit der Ankopplung gegenüber Erschütterungen stellt einen Nachteil für den verlässlichen Betrieb der Klappensteuerung dar.

Es ist daher die Aufgabe der Erfindung, eine Klappensteuerung zu schaffen, die die Ausfahrbewegung des Ausfahrgerätes in eine Klappenbewegung übersetzt, dabei konstruktiv einfach, robust und platzsparend gestaltet ist und eine zuverlässige und kontrollierte Klappenbewegung erlaubt.

Diese Aufgabe wird durch eine Klappensteuerung mit den in Anspruch 1 angegebenen Merkmalen gelöst. Vorteilhafte Weiterbildungen der Erfindung sind in den Unteransprüchen, der nachfolgenden Beschreibung und der Zeichnung angegeben.

Die erfindungsgemäße Klappensteuerung für ein Ausfahrgerät in einem Unterseeboot steuert die Klappen eines Schachts, in welchem ein Ausfahrgerät in Längsrichtung des Schachts verfahrbar ist. Sie weist einen Schlitten auf, der in dem Schacht in Längsrichtung verfahrbar ist und welcher entlang mindestens eines Schachtabschnitts mit dem Ausfahrgerät bewegungsgekoppelt ist. Am äußeren Ende des Schachts ist mindestens eine Klappe angeordnet, die sowohl an mindestens einem zum Schacht ortsfesten Bereich als auch am Schlitten angelenkt ist. Dabei sind die Schwenkachsen der Klappenanlenkungen voneinander beabstandet.

Die Klappensteuerung steuert dabei die am äußeren Ende des Schachts angeordnete Klappe und kontrolliert ihren Öffnungszustand durch die Bewegung des im Schacht in Längsrichtung verfahrbaren Ausfahrgerätes. Hierzu wird die Bewegung des Ausfahrgerätes entlang nur eines Schachtbereichs in eine Bewegung des in Längsrichtung im Schacht verfahrbaren Schlittens umgesetzt, d.h. Ausfahrgerät und Schlitten werden nur abschnittsweise bewegungsgekoppelt. Sowohl an dem Schlitten als auch an einem zum Schacht ortsfesten Bereich ist die Klappe angelenkt, wobei die Schwenkachsen voneinander beabstandeten sind. Somit kann die lineare Bewegung des Schlittens im Schacht in eine Schwenkbewegung der Klappe übersetzt werden. Die Verwendung eines starren und längs der Schachtrichtung beweglichen Schlittens zur Ankopplung der Klappenbewegung an die Ausfahrgerätebewegung stellt dabei einen großen Vorteil gegenüber dem Stand der Technik dar. Während bei einer Klappensteuerung nach dem Stand der Technik die Bewegung des Ausfahrgerätes zunächst in eine Bewegung schachtseitig montierter Elemente quer zur Längsrichtung des Schachts übertragen wird und nachfolgend über eine mehrere Gelenke enthaltende Gestängekonstruktion in einen Hub zur Klappenöffnung übersetzt werden muss, kann bei der erfindungsgemäßen Klappensteuerung die Bewegung des Ausfahrgerätes über ein linear bewegbares starres Element wesentlich direkter in eine Klappenbewegung umgesetzt werden. Damit erweist sich die Klappensteuerung vorteilhaft als weitestgehend sicher gegenüber Verkeilungen und Verklemmungen. Im Gegensatz zu einer Gestängekonstruktion wird der Schlitten bei der erfindungsgemäßen Klappensteuerung zudem bevorzugt flächig ausgebildet. In einer solchen Ausgestaltung kann die lineare Bewegung des Schlittens leicht und besonders stabil in eine Schwenkbewegung der Klappe umgesetzt werden, da der Schlitten hier eine hohe Steifigkeit gegenüber Verformungskräften, etwa Biege- und/oder Scherkräften infolge der Klappenanlenkung, aufweist. Zudem lässt sich bei der Anlenkung der Klappe an den Schlitten und an einem zum Schacht ortsfesten Bereich der Abstand zwischen beiden Schwenkachsen freier wählen, als dies bei einem sich entlang des Schachts hebenden Gestänge möglich ist. Damit kann die Übersetzung der Schlittenbewegung in eine Schwenkbewegung für eine wohlkontrollierbare Klappenbewegung geeignet gewählt werden.

In einer vorteilhaften Ausgestaltung ist die Klappe, bevorzugt mittels eines Federelements oder mehrerer Federelemente, in Öffnungsrichtung kraftbeaufschlagt. Dabei ist das Federelement zweckmäßigerweise zwischen der Klappe, sowie an einem zum Schacht ortsfesten Bereich verspannt. Bevorzugt ist das Federelement dabei als Druckfeder ausgebildet, die parallel zur Längsachse des Schachts orientiert ist und sich zwischen einer Stelle der Klappe und einem zum Schacht ortsfesten Bereich abstützt. Durch die Kraftbeaufschlagung in Öffnungsrichtung gewährt diese Konstruktion eine Sicherung vor unbeabsichtigtem Verschluss oder Schlagen der Klappe. So wird die Klappe automatisch geöffnet, falls die Bewegungskopplung von Ausfahrgerät und Schlitten versagen sollte. Folglich kann das Ausfahren des Ausfahrgerätes vor eine unbeabsichtigt verschlossene Klappe und damit eine Beschädigung des Ausfahrgerätes wirksam vermieden werden. Ferner bietet die Konstruktion einen doppelten Schutz vor dem unbeabsichtigten Schlagen der Klappe gegen das ausgefahrene Ausfahrgerät (s. a. unten).

Bevorzugt ist am Ausfahrgerät ein Mitnehmer und am Schlitten eine mit dem Mitnehmer in Eingriff bringbare Kupplung angeordnet. In dieser Ausgestaltung wird dabei die Ausfahrbewegung des Ausfahrgerätes über den Mitnehmer auf die Kupplung und damit auf den Schlitten übertragen. Damit kann eine Bewegungskopplung zwischen Ausfahrgerät und Schlitten genau solange erfolgen, wie es zur Klappensteuerung erforderlich und geeignet ist. Das ausgefahrene Ausfahrgerät kann dann vom Schlitten entkoppelt sein. Auf diese Weise sind die Klappen im Öffnungszustand vom Ausfahrgerät entkoppelt und somit von der Position des Ausfahrgerätes unabhängig. Darüber hinaus bietet die Anordnung der Kupplung auf dem Schlitten den Vorteil, dass diese bei einer Entnahme des Schlittens aus dem Schacht einfach zugänglich ist. Daher lässt sich die Klappensteuerung einfach vor einem Einbringen des Schlittens in den Schacht montieren bzw. nach einer Entnahme des Schlittens aus dem Schacht warten oder reparieren.

Vorteilhaft weist die Kupplung mindestens ein schachtseitig angeordnetes Steuermittel auf. Eine solche Ausgestaltung bietet eine einfache Möglichkeit zur Ansteuerung der Kupplung. Bevorzugt wird die Kupplung dabei direkt durch die Schlittenposition im Schacht gesteuert. Damit kann die Klappensteuerung die Klappe selbsttätig öffnen, entsprechend der Position des ausfahrenden Gerätes im Schacht.

In weiterer bevorzugter Ausgestaltung der Klappensteuerung weist die Kupplung mindestens ein am Schlitten beweglich angeordnetes Kupplungselement auf. Das Ein- oder Auskoppeln kann durch eine geeignete Bewegung des beweglichen Kupplungselementes erfolgen. An diesem beweglichen Kupplungselement ist dazu ein Führungskörper angeordnet, welcher vorteilhaft in einer Bahnführung läuft, die das schachtseitige Steuermittel bildet. Die Bewegung des Kupplungselementes ist dabei durch die Bahnführung bestimmt, in dem der Führungskörper des beweglichen Elementes bei der Bewegung des Schlittens durch den Schacht geführt wird. Damit lässt sich die Kupplung auf rein mechanische Weise in Abhängigkeit von der Schlittenposition im Schacht steuern. Insbesondere kann durch das Steuermittel eine Bewegungskopplung von Ausfahrgerät und Schlitten auf einen zur Klappensteuerung geeigneten Schachtabschnitt begrenzt werden.

In einer weiteren vorteilhaften Ausbildung der Erfindung ist die Kupplung in einer ersten Stellung mit dem schachtauswärts bewegten Mitnehmer formschlüssig bewegungsgekoppelt und in einer zweiten Stellung durch die Freigabe des auswärts bewegten Mitnehmers entkoppelt. Hierbei wird die Kupplung von der ersten in die zweite Stellung mittels des schachtseitigen Steuermittels überführt. In dieser Ausgestaltung bewegt das Ausfahrgerät über seinen Mitnehmer und über die in ihrer ersten Stellung mit dem Mitnehmer gekoppelte Kupplung den Schlitten. Das schachtseitig angeordnete Steuermittel (Bahnführung) steuert bei der weiteren Ausfahrt des Gerätes und der damit verbundenen Schlittenbewegung im Schacht die Kupplung von ihrer ersten in die zweite Stellung. In dieser zweiten Stellung endet die Bewegungskopplung zwischen Schlitten und Mitnehmer. Dies erfolgt durch die Freigabe des Mitnehmers, der sich nun mit dem Ausfahrgerät weiter auswärts bewegen kann, ohne den Schlitten weiter zu bewegen. So kann die Bewegung des Schlittens in der ersten Kupplungsstellung genutzt werden, um die Klappe für das Ausfahrgerät zu öffnen, während das Ausfahrgerät nach der Auskopplung seines Mitnehmers aus der in der zweiten Stellung befindlichen Kupplung heraus durch den geöffneten Schacht aus dem Unterseeboot ausfahren kann. Insbesondere kann der Schlitten auf diese Weise stets im Schacht verbleiben. In dieser zweiten Stellung ist der Öffnungszustand der Klappe von der Ausfahrgeräteposition folglich unabhängig und gegenüber Erschütterungen und anderen äußeren Einwirkungen auf das Ausfahrgerät unempfindlich.

Diese Ausgestaltung lässt sich mit einer weiteren bevorzugten Ausgestaltung der Erfindung kombinieren, bei welcher die Kupplung in ihrer zweiten Stellung den schachteinwärts bewegten Mitnehmer durch das schachtseitige Steuermittel gesteuert einkoppelt, und ihn in der ersten Stellung freigibt. Damit wird bei einfahrendem Ausfahrgerät die Stellung der Kupplungsteile zueinander sowie zum Mitnehmer in den Ausgangszustand vor einer Geräteausfahrt zurückversetzt. Ein Verschluss der Schachtklappen bei einfahrendem Ausfahrgerät kann vorteilhaft mittels eines am Schlitten zusätzlich vorgesehenen Formschlusselements erfolgen, welches mit dem Mitnehmer nach der Einkopplung in Einfahrtrichtung bewegungsgekoppelt ist. Über die Bewegungskopplung bewegt das einfahrende Ausfahrgerät den Schlitten, sodass die an den Schlitten angelenkte Schachtklappe oder -klappen über die Schlittenbewegung verschlossen werden. In diesem Zustand ist die gesamte Klappensteuerung in den Ausgangszustand vor einer Geräteausfahrt zurückversetzt, sodass eine erneute Ansteuerung der Klappen bei Geräteausfahrt erfolgen kann.

In einer bevorzugten Ausgestaltung der Erfindung weist die Kupplung vorzugsweise zwei Kupplungselemente in Form von schwenkbar angeordneten Kupplungsbacken auf. Die Ein- und Auskopplung des Mitnehmers kann nun durch Schwenkbewegungen der Kupplungsbacken erfolgen. Bevorzugt wirken dabei die beiden Kupplungsbacken in beiden Stellungen jeweils als ein Formschlusselement zusammen, das eine Aufnahme für den Mitnehmer bildet, über welche es mit dem Mitnehmer koppeln kann. Dabei wirken die Kupplungsbacken in der ersten Stellung bevorzugt dergestalt zusammen, dass das Formschlusselement eine schachteinwärts Aufnahme bildet, mit welcher der auswärts bewegte Mitnehmer formschlüssig in Ausfahrrichtung bewegungskoppeln kann. Bei der Überführung in die zweite Stellung schwenken die Kupplungsbacken bevorzugt in eine solche Stellung, dass sie schachtauswärts die Aufnahme für den Mitnehmer öffnen. Vorzugsweise werden dabei die Kupplungsbacken über das schachtseitig angeordnete Steuermittel, insbesondere die Bahnführung für auf den Kupplungsbacken angeordnete Führungskörper, bewegt.

Vorteilhaft ist die Klappensteuerung so ausgestaltet, dass das oder die beweglich angeordneten Kupplungselemente mit mindestens einem Vorspannelement, vorzugsweise einem Federelement, bei entkoppeltem Schlitten in Richtung einer ihrer beiden Endstellungen kraftbeaufschlagt sind. Da bei bewegungsentkoppeltem Schlitten in der Regel keine weiteren Kräfte auf die Kupplung wirken, ist die Kupplung durch das Vorspannelement in eine ihrer beiden Kupplungsstellungen voreingestellt. Damit bedarf es einer aktiven Ansteuerung der Kupplungselemente, um die Kupplung in ihre andere Stellung zu bringen. Eine bevorzugte Ansteuerung der Kupplungselemente ist durch das schachtseitig angeordnete Steuermittel gegeben. In einer solchen Konfiguration muss das schachtseitig angeordnete Steuermittel die Kupplungselemente lediglich entlang eines kurzen zur Klappenöffnung geeigneten Schachtabschnittes in die erste Position führen, da der zur Klappenöffnung erforderliche Schachtabschnitt für typische Ausfahrgeräte in Unterseebooten einen vergleichsweise kurzen Schachtabschnitt ausmachen wird. Entsprechend kann das Steuermittel auf diese Weise besonders material- und kostensparend ausgelegt werden. Alternativ kann anstatt des Vorspannelementes auch ein Feststellelement verwendet werden. Vorzugsweise ist dieses Feststellelement als ein zusätzliches schachtseitiges Steuermittel ausgelegt, das die Kupplung bei entkoppelten Schlitten in eine ihrer beiden Stellungen feststellt.

Weiter bevorzugt ist das schachtseitige Steuermittel so ausgebildet, dass der mindestens eine Führungskörper mit dem schachtseitigen Steuermittel in der zweiten Stellung der Kupplung formschlüssig in Eingriff bringbar ist, wobei der Schlitten im Schacht festgelegt wird. Dabei kann der Formschluss bevorzugt nur durch die Bewegung des oder der beweglichen Teile der Kupplung bei der Überführung von der zweiten in die erste Kupplungsstellung gelöst werden. Damit lässt sich zuverlässig verhindern, dass äußere Krafteinwirkungen auf den Schlitten ein Schlagen der Klappen gegen das ausgefahrene Ausfahrgerät zur Folge haben.

In einer weiteren bevorzugten Ausgestaltung der Erfindung weist der Schacht mindestens eine im Wesentlichen ebene Wand auf, an welcher der Schlitten zwischen Schachtwand und Ausfahrgerät läuft. In dieser Ausgestaltung kann der Schlitten besonders stabil und platzsparend ausgelegt werden. So kann der Schlitten an die ebene Wand des Schachtes angepasst werden und vorzugsweise eben und flächig ausgestaltet werden. So bleibt der überwiegende Teil des Schachtvolumens durch das Ausfahrgerät nutzbar. Gleichzeitig erhöht eine flächige Ausbildung des Schlittens die mechanische Stabilität der Klappensteuerung insbesondere gegenüber seitlich angreifenden Biege- und Scherkräften. Darüber hinaus ist ein ebener und flächig ausgebildeter Schlitten besonders kostengünstig zu fertigen.

In weiterer vorteilhafter Ausgestaltung der Klappensteuerung ist die Kupplung im Bezug auf den Mitnehmer quer zur Schachtachse spielbehaftet. Auf diese Weise ist die Klappensteuerung gegenüber Erschütterungen oder Schockeinwirkungen besonders unempfindlich. Vorteilhafterweise ist dazu die Kupplung derart ausgestaltet, dass der quer zur Schachtachse verlaufende Bereich, in dem der Mitnehmer in die Kupplung einkoppeln kann, besonders breit ausgebildet ist.

Besonders günstig ist es, wenn bei einem Schacht tetragonförmigen Querschnitts an zwei gegenüberliegenden Seiten des Schachts zwei Klappen angelenkt sind, an den beiden anderen Seiten des Schachts je ein Schlitten im Schacht geführt ist, die beiden Klappen jeweils an beide Schlitten angelenkt sind und jeder Schlitten eine Kupplung für den Mitnehmer aufweist, wobei die Mitnehmer an zwei voneinander abgewandten Seiten des Ausfahrgerätes angeordnet sind. Damit ist die Funktionsfähigkeit der Klappensteuerung über die Verwendung zweier unabhängiger Klappensteuerungen in demselben Schacht gewährleistet. Dies verringert das Risiko eines Totalausfalls der Klappensteuerung erheblich und vermeidet die Gefahr eines Verkantens. Bevorzugt sind dabei die Schlitten eben und flächig ausgestaltet, sodass beide Klappensteuerungen platzsparend in dem Schacht untergebracht werden können.

Nachfolgend wird die Erfindung anhand eines in der Zeichnung dargestellten Ausführungsbeispiels näher erläutert. Es zeigen:

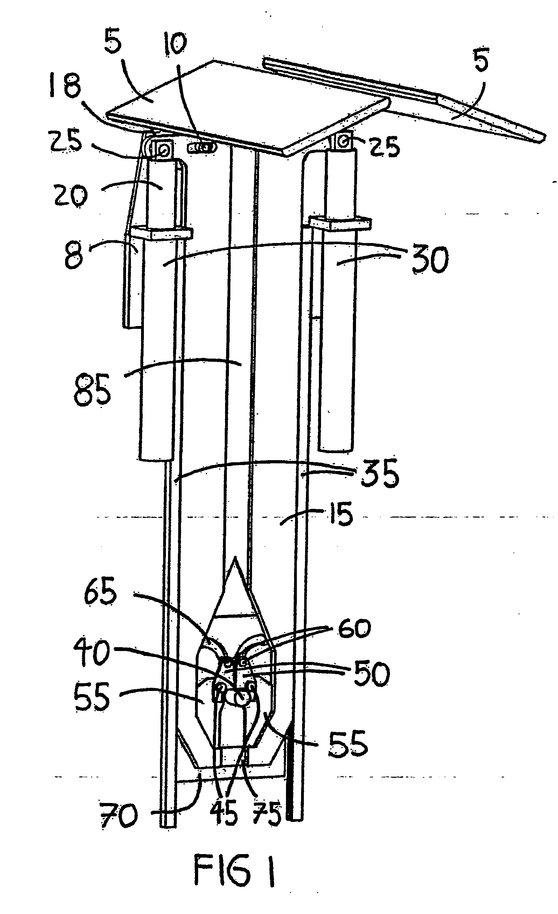

- Fig. 1: einen Teil einer Klappensteuerung für ein Ausfahrgerät in einem Unterseeboot in perspektivischer, schematischer Darstellung,
- Fig. 2: die Klappensteuerung gemäß Fig. 1 schematisch in einer Ansicht in mehreren Stellungen (A-D) beim Öffnen der Klappen und
- Fig. 3: die Klappensteuerung gemäß Fig. 1 schematisch in einer Ansicht in mehreren Stellungen (A-D) beim Schließen der Klappen.

Die in den Figuren dargestellte Klappensteuerung für ein Ausfahrgerät in einem Unterseeboot weist zwei anzusteuernden Klappen 5 auf. Diese Klappen 5 sind an einem äußeren Ende eines Schachts 8 angeordnet, den sie im geschlossenen Zustand bündig mit der Außenhaut abschließen. In diesem Ausführungsbeispiel besitzt der Schacht 8 einen rechteckigen Querschnitt (der Schacht 8 ist in den Figuren nur teilweise dargestellt). Die beiden Klappen 5 sind dabei an den gegenüberliegenden Seiten des Schachts 8 angelenkt und über Achsen 10 mit zwei Schlitten 15 gekoppelt, die an den beiden anderen gegenüberliegenden Seiten des Schachts 8 längsverschieblich geführt sind. Beide Schlitten 15 werden dabei durch dasselbe Ausfahrgerät angesteuert. Zur Veranschaulichung der Funktionsweise ist in den Figuren lediglich eine der beiden Klappensteuerungen gezeigt.

Die Klappen 5 sind zum einen über die Achsen 16 an einem ortsfesten Bereich des Schachtes 8 angelenkt, zum anderen sind sie über Achsen 10 an einem Schlitten 15 angelenkt, der die Klappen steuert. Die Anlenkungen an den Schlitten sind dabei von den Schwenkachsen der Klappen beabstandet, sodass eine wohl kontrollierte Steuerung der Klappen ermöglicht wird. Zur Anlenkung der Klappen 5 an den Schlitten 15 sind die Achsen 10 an Blechen 18 angebracht, welche senkrecht zur Klappenoberfläche und senkrecht zur Schwenkachse orientiert an der Klappenoberfläche an der Innenseite befestigt sind. Die zapfenartigen Achsen 10 sind parallel zur Schwenkachse durch das Blech 18 geführt und greifen in ein Langloch des Schlittens 15. Die Längsachse des Langlochs verläuft dabei quer zur Längsachse des Schachts 8, in welchem der flächig ausgelegte Schlitten senkrecht zur Schwenkachse der Klappen 5 orientiert ist. Darüber hinaus sind die Klappen 5 mittels Federelementen 20, die hier als zylindrische Schraubendruckfedern ausgebildet sind, in Öffnungsrichtung kraftbeaufschlagt. Dazu weisen die Schraubendruckfedern 20 jeweils an einem Ende Bohrungen für die Achsen 25 auf, welche senkrecht an dem Blech 18 angebracht sind. An ihrem anderen Ende sind die Schraubendruckfedern 20 in einem zum Schacht 8 ortsfesten Bereich in Hülsen 30 gelagert.

Die Klappen 5 werden über die Achsen 10 durch einer lineare Auf- bzw. Abwärtsbewegung des Schlittens 15 im Schacht 8 geschwenkt. Zur beweglichen Lagerung jedes Schlittens 15 sind im Schacht 8 zwei Schlittenführungen 35 angeordnet, in welchen der Schlitten 15 entlang der Längsachse des Schachts 8 in Richtung des Schachts beweglich und im übrigem formschlüssig gehalten geführt ist. Die Schlittenführungen 35 sind mit der Innenwand des Schachts 8 verschraubt und weisen u-förmige Querschnitte auf, deren Schenkel an Vor- und Rückseite des Schlittens 15 anliegen. Der Schlitten 15 kann zur Ansteuerung der Klappen 5 mit einem am Ausfahrgerät angeordneten Mitnehmer 40 formschlüssig bewegungsgekoppelt werden (das Ausfahrgerät selbst ist in den Figuren nicht dargestellt). Der Schlitten 15 verfügt dazu über zwei geeignet ausgebildete Schlittenbereiche: Zum einen weist der Schlitten 15 eine Kupplung für den Mitnehmer 40 auf, die zwei an Achsen 45 schwenkbar angeordnete Kupplungsbacken 50 enthält, die in Vertiefungen 55 am Schlitten 15 angeordnet sind. Die beiden Kupplungsbacken 50 weisen jeweils zwei Schenkel auf und sind an ihren Scheiteln, an welchen die Schenkel zusammentreffen, um die Achsen 45 schwenkbar. Die Kupplungsbacken 50 können dabei in zwei Stellungen geschwenkt werden, in welchen sich jeweils ein Schenkelpaar der Kupplungsbacken 50 zusammengeführt ist. Damit wirken die Kupplungsbacken 50 je nach Stellung als ein Formschlusselement für den schachtaus- oder schachteinwärts bewegten Mitnehmer 40 zusammen. Die Kupplungsbacken 50 weisen je einen Führungsstift 60 als Führungskörper auf, welcher in einer nutartig ausgebildeten Bahnführung 65 einer schachtseitig angebrachten Profilplatte 70 geführt wird. Die Profilplatte 70 dient hierbei als schachtseitiges Steuermittel. Zum anderen kann der Schlitten 15 über das Formschlusselement 75 mit dem Mitnehmer 40 bewegungsgekoppelt werden, welches in dieser Ausführungsform als ein quer zur Längsachse des Schachts 8 orientierter Quersteg ausgebildet ist. Um Klappensteuerung und Ausfahrgerät beim Anschlagen des Mitnehmers 40 an den Quersteg 75 zu schützen, weist der Quersteg 75 auf seiner schachtauswärts gerichteten Seite einen Gummipuffer auf (in den Zeichnungen nicht dargestellt).

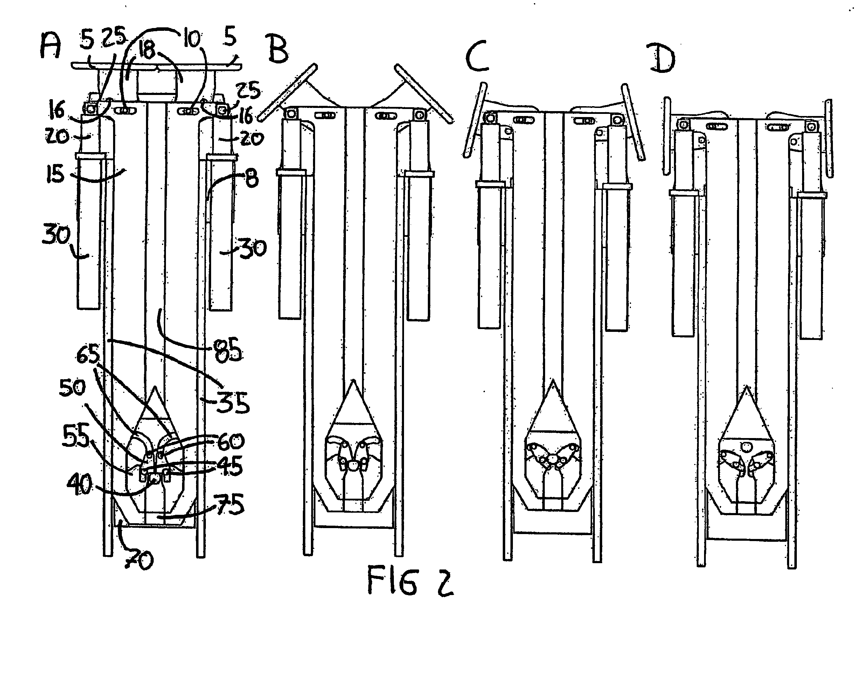

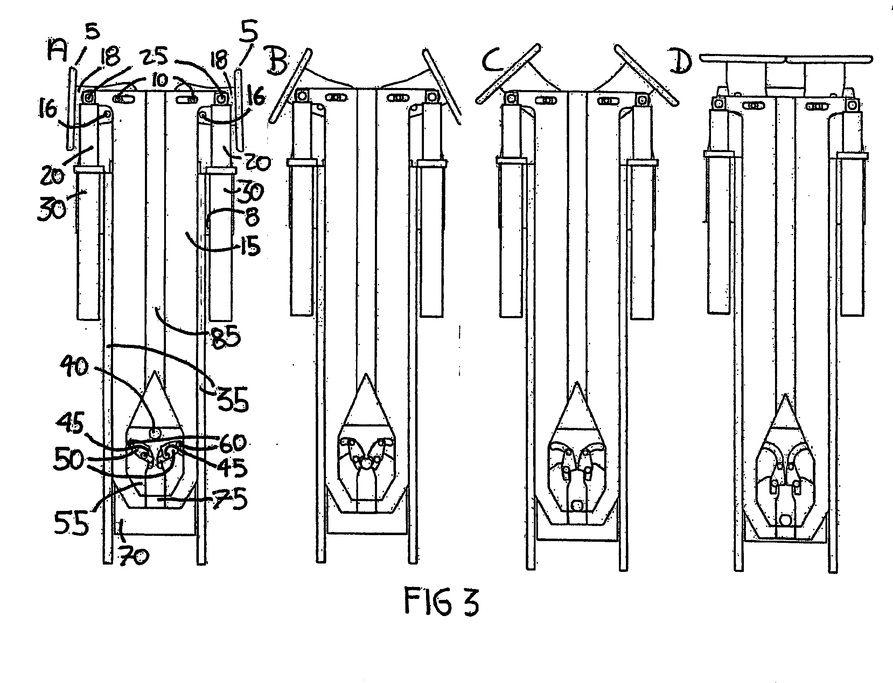

Die Kupplung des Schlittens 15, die Profilplatte 70 und der Mitnehmer 40 wirken dabei zur Bewegung des Schlittens 15 und damit zur Ansteuerung der Klappen 5 zusammen. Im Folgenden wird anhand von Figur 2 beispielhaft eine Klappenöffnung bei ausfahrendem Ausfahrgerät und anhand von Figur 3 ein Klappenverschluss bei einfahrendem Ausfahrgerät beschrieben. Die Abbildungen A bis D der Figuren 2 und 3 zeigen die Klappensteuerung in ausgewählten Stellungen beim Öffnungs- und Schließvorgang.

Bei eingefahrenem Ausfahrgerät sind die Klappen 5 zunächst verschlossen. Bei der Ausfahrt des Ausfahrgerätes aus dem Schacht 8 bewegt sich der Mitnehmer 40 schachtauswärts und stößt von unten gegen die beiden Kupplungsbacken 50 (Abbildung A in Fig. 2). Die Kupplungsbacken 50 sind dabei in eine solche Stellung geschwenkt, dass sie den Schlitten 15 in Ausfahrrichtung formschlüssig an den Mitnehmer 40 und somit an das Ausfahrgerät koppeln. In dieser Stellung werden die Kupplungsbacken 50 durch die beiden Führungsstifte 60 gehalten, von denen jeweils einer an dem schachtauswärts weisenden Schenkel einer Kupplungsbacke 50 angebracht ist. Die Führungsstifte 60 werden in den beiden Nuten 65 der Profilplatte 70 geführt, sodass die Profilplatte 70 die Stellung der Kupplungsbacken 50 steuert. Die Nuten 65 sind an ihren schachteinwärts weisenden Enden mit geringem Abstand voneinander als nahezu paralleles Nutenpaar ausgebildet. Entsprechend werden die schachtauswärts weisenden Schenkel der Kupplungsbacken 50 über die Führungsstifte 60 derart zusammengeführt, dass diese ein Formschlusselement bilden, mit welchem der Mitnehmer 40 formschlüssig koppelt. Über diese Kupplungsstellung ist der schachtauswärts bewegte Mitnehmer 40 mit der Kupplung selbst und damit auch mit dem Schlitten 15 bewegungsgekoppelt. Bei der weiteren Ausfahrt bewegt der Mitnehmer 40 den Schlitten 50 folglich schachtauswärts und die Klappen 5 werden in Folge der Schlittenbewegung geöffnet (Abbildung B in Fig. 2).

Bei der weiteren Ausfahrt des Ausfahrgerätes entkoppelt die Kupplung den Mitnehmer 40. Zu diesem Zweck sind die beiden Nuten 65 zur Führung der Führungsstifte 60 an ihren schachtauswärts weisenden Enden jeweils bogenförmig und auseinanderweisend angeordnet. Dabei sind die bogenförmigen Enden der Nuten 65 so orientiert, dass ihr Abstand voneinander am schachtauswärtigen Nutenende maximal ist. Damit schwenken die Kupplungsbacken 50 bei der Ausfahrt des Schlittens derart um die Achsen 45, dass die schachtauswärts weisenden Schenkel der Kupplungsbacken 50 voneinander beabstandet, und die schachteinwärts weisenden Schenkel der Kupplungsbacken 50 einander genähert werden. Auf diese Weise wird der Mitnehmer 40 während seiner Ausfahrt durch die Backen 50 hindurchgeführt. (Abbildung C in Fig. 2). Der schachtauswärts gerichtete Vortrieb des Schlittens 15 öffnet dabei die Klappen 5 vollständig. Nach der Klappenöffnung gleiten die Führungsstifte 60 der Kupplungsbacken 50 an diejenigen Enden der Nuten 65, die den größten Abstand von einander aufweisen. Damit schwenken die Kupplungsbacken 50 in ihre zweite Stellung, in welcher die schachtauswärts weisenden Schenkel der Kupplungsbacken 50 voneinander beabstandet sind und sich die schachteinwärts weisenden Schenkel gegenseitig berühren. Derart zusammenwirkend geben die Kupplungsbacken 50 den Mitnehmer 40 schachtauswärts frei, so dass der Mitnehmer 40 ungehindert auskoppeln kann (Abbildung D in Fig. 2).

Bei der weiteren Ausfahrt des Ausfahrgerätes sind Mitnehmer 40 und Schlitten 15 in ihren Bewegungen entlang der Schachtachse vollständig entkoppelt, sodass die weitere Ausfahrt des Ausfahrgerätes die aufgesperrten Klappen 5 in Ihrer Stellung nicht beeinflusst. Gleichzeitig wird die Kupplung bei fehlender Bewegungskopplung zwischen Schlitten 15 und Mitnehmer 40 in Ihrer Stellung gehalten. Dazu ist an den schachtauswärts weisenden Schenkeln der Kupplungsbacken 50 je eines der beiden Enden eines Federelementes angeordnet (in den Zeichnungen nicht dargestellt), das die Schenkel derart kraftbeaufschlagt, dass sie voneinander beabstandet bleiben, solange keine weiteren Kräfte auf die Kupplungsbacken 50 wirken. Entsprechend behält die Kupplung ihre Stellung bis zur Einfahrt des Mitnehmers 40 beim nachfolgenden Einfahren des Ausfahrgerätes bei.

Zudem wird der Schlitten 15 in einer solchen Position im Schacht 8 gehalten, dass die Klappen 5 selbst bei äußerer Krafteinwirkung auf den Schlitten 15 nicht wieder schließen: dazu ist die Nut 65 so ausgebildet, dass bei geöffneten Klappen 5 und bei dazu in die zweite Stellung geführten Kupplungsbacken 50 die Führungsstifte 60 in einer Vertiefung der Nut 65 liegen (in den Zeichnungen nicht dargestellt). Aufgrund der Gestalt der Vertiefung sind die Führungsstifte 60 formschlüssig mit der Vertiefung der Nut 65 verbunden. Einzig eine Schwenkbewegung der Kupplungsbacken 50 durch den Kontakt des Mitnehmers 40 mit den Kupplungsbacken 50 bei der Einfahrt des Ausfahrgerätes gibt die Führungsstifte 60 aus der Vertiefung frei. Damit lässt lediglich ein einfahrendes Ausfahrgerät eine axiale Verschiebung des Schlittens 15 und somit einen Klappenverschluss zu. Daher sind die Klappen 5 auch bei starken Erschütterungen und Schockeinwirkungen gegen ein Schlagen der Klappen 5 gegen das Ausfahrgerät gesichert. Zusätzlich sind die Klappen 5 darüber hinaus durch die Schraubendruckfedern 20 in Öffnungsrichtung kraftbeaufschlagt. Damit beeinflussen auch starke Trägheitskräfte auf den Schlitten 15 den Öffnungszustand der Klappen 5 nicht.

Bei ausgefahrenem Ausfahrgerät sind die Klappen 5 zunächst geöffnet und der Mitnehmer 40 des Ausfahrgerätes vom Schlitten 15 vollständig entkoppelt (Abbildung A in Figur 3). Bei der Einfahrt des Ausfahrgerätes in den Schacht 8 bewegt sich der Mitnehmer 40 schachteinwärts und stößt gegen die beiden Kupplungsbacken 50 der Kupplung des Schlittens 15. Die Kupplungsbacken 50 bilden bei geöffneten Klappen 5 ein Formschlusselement, mit welchen der Mitnehmer 40 formschlüssig bewegungskoppelt. Bei der weiteren Einfahrt bewegt der Mitnehmer 40 den Schlitten 15 entsprechend schachteinwärts. Dabei werden zum einen bereits die Klappen 5 einen Teil ihres Schwenkweges in Schließrichtung geschwenkt. Zum anderen bewirkt die Mitnahme des Schlittens 15, dass die Führungsstifte 60 in den schachtauswärts weisenden bogenförmigen Enden der Nuten 65 der Profilplatte 70 näher zusammengeführt werden. Entsprechend werden über die Führungsstifte 60 die schachtauswärts weisenden Schenkel der Kupplungsbacken 50 zusammengeführt (Abbildung B in Figur 3). Dadurch werden die Kupplungsbacken 50 um die Achsen 45 geschwenkt, sodass der Mitnehmer 40 zwischen den Kupplungsbacken 50 hindurch fahren kann, während die Kupplungsbacken 50 in ihre erste Stellung zueinander überführt werden. Die Kupplungsbacken 50 wirken in dieser Stellung als Formschlusselement zusammen, mit welchem der Mitnehmer 40 bei einer nachfolgenden Ausfahrt abermals bewegekungskoppeln kann.

In dieser Stellung wird der Mitnehmer 40 aus der Kupplung freigegeben und koppelt in seiner weiteren Einfahrt formschlüssig über den Quersteg 75 mit dem Schlitten 15. Der Anschlag des Mitnehmers 40 an den Schlitten 15 wird dabei von einem Gummipuffer gedämpft. Bei der weiteren Einfahrt des Ausfahrgerätes in den Schacht 8 ist der Mitnehmer 40 folglich direkt mit dem Schlitten 15 bewegungsgekoppelt und schiebt diesen ins Schachtinnere. Dabei schließt der einfahrende Schlitten 15 über die Gelenke 10 die Klappen 5 weiter (Abbildung C in Figur 3). Nach vollständiger Einfahrt des Ausfahrgerätes sind die Klappen 5 geschlossen.

In diesem Zustand der Klappensteuerung kann das Ausfahrgerät bei einer Ausfahrt die Klappen 5 wie oben beschrieben wieder öffnen (Abbildung D in Figur 3). Die Klappensteuerung gemäß diesem Ausführungsbeispiel arbeitet folglich vollkommen reversibel, ohne dass manuelle Eingriffe von außen notwendig sind.

### Bezugszeichenliste

| | | |
|---|---|---|
| 5 | - | Klappen |
| 8 | - | Schacht |
| 10 | - | Achsen |
| 15 | - | Schlitten |
| 16 | - | Achsen |
| 18 | - | Blech |
| 20 | - | Schraubendruckfedern als Federelemente |
| 25 | - | Achsen |
| 30 | - | Federhülsen |
| 35 | - | Schienen |
| 40 | - | Mitnehmer |
| 45 | - | Achsen |
| 50 | - | Kupplungsbacken |
| 55 | - | Vertiefung |
| 60 | - | Führungsstifte als Führungskörper |
| 65 | - | Nut als Bahnführung |
| 70 | - | Profilplatte als Steuermittel |
| 75 | - | Quersteg als Formschlusselement |
| 85 | - | Vertiefung |

## Patentansprüche

1. Klappensteuerung für ein Ausfahrgerät in einem Unterseeboot mit einem Schacht (8), in dem das Ausfahrgerät in Längsrichtung verfahrbar ist, mit mindestens einem Schlitten (15), der in dem Schacht (8) in Längsrichtung verfahrbar ist und welcher entlang mindestens eines Schachtabschnitts mit dem Ausfahrgerät bewegungsgekoppelt ist, **gekennzeichnet durch** mindestens eine am äußeren Ende des Schachts (8) angeordneten Klappe (5), die sowohl an mindestens einem zum Schacht (8) ortsfesten Bereich als auch am Schlitten (15) angelenkt ist, wobei die Schwenkachsen (10, 16) voneinander beabstandet sind.

2. Klappensteuerung nach Anspruch 1, bei welcher die Klappe (5), bevorzugt mittels eines Federelements (20), in Öffnungsrichtung kraftbeaufschlagt ist.

3. Klappensteuerung nach einem der vorhergehenden Ansprüche, bei der am Ausfahrgerät ein Mitnehmer (40) und am Schlitten (15) eine mit dem Mitnehmer (40) in Eingriff bringbare Kupplung vorgesehen ist.

4. Klappensteuerung nach Anspruch 3, bei der die Kupplung mindestens ein schachtseitig angeordnetes Steuermittel (70) aufweist.

5. Klappensteuerung nach Anspruch 4, bei der die Kupplung mindestens ein am Schlitten (15) beweglich angeordnetes Kupplungselement (50) aufweist, an welchem ein Führungskörper (60) angeordnet ist, und bei welcher das schachtseitige Steuermittel (70) durch eine Bahnführung (65) gebildet ist, in welchem der Führungskörper (60) läuft.

6. Klappensteuerung nach Anspruch 4 oder 5, bei welcher die Kupplung in einer ersten Stellung mit dem schachtauswärts bewegten Mitnehmer (40) formschlüssig bewegungsgekoppelt ist und bei welcher die Kupplung mittels des schachtseitigen Steuermittels (70) in eine zweite Stellung überführt wird, in welcher sie den auswärts bewegten Mitnehmer (40) freigibt.

7. Klappensteuerung nach Anspruch 6, bei welcher die Kupplung in der zweiten Stellung den schachteinwärts bewegten Mitnehmer (40) mittels des schachtseitigen Steuermittels (70) einkoppelt, und ihn in der ersten Stellung freigibt.

8. Klappensteuerung nach Anspruch 7, bei welcher der Schlitten (15) ein Formschlusselement (75) aufweist, welches mit dem Mitnehmer (40) nach Einkopplung in Einfahrtrichtung bewegungskoppelt.

9. Klappensteuerung nach einem der vorhergehenden Ansprüche, bei welcher die Kupplung vorzugsweise zwei Kupplungselemente in Form von schwenkbar angeordneten Kupplungsbacken (50) aufweist.

10. Klappensteuerung nach einem der vorhergehenden Ansprüche, bei welcher das oder die Kupplungselemente (50) mit mindestens einem Vorspannelement, vorzugsweise einem Federelement, bei entkoppeltem Schlitten (15) in Richtung einer ihrer beiden Stellungen kraftbeaufschlagt sind.

11. Klappensteuerung nach einem der vorhergehenden Ansprüche, bei welcher das oder die Kupplungselemente (50) mit einem Feststellelement, vorzugsweise einem weiteren Steuermittel, bei entkoppeltem Schlitten (15) in Richtung einer ihrer beiden Stellungen kraftbeaufschlagt sind.

12. Klappensteuerung nach einem der vorhergehenden Ansprüche, bei welchem der mindestens eine Führungskörper 60 mit dem schachtseitigen Steuermittel 70 in der zweiten Kupplungsstellung formschlüssig in Eingriff bringbar ist und dabei den Schlitten im Schacht festlegt, wobei durch die Überführung der Kupplung von der zweiten in die erste Kupplungsstellung der Formschluss aufhebbar ist.

13. Klappensteuerung nach einem der vorhergehenden Ansprüche, bei welchem der Schacht (8) mindestens eine ebene Wand aufweist, an welcher der Schlitten (15) zwischen Schachtwand und Ausfahrgerät läuft.

14. Klappensteuerung nach einem der vorhergehenden Ansprüche, bei welcher die Kupplung in Bezug auf den Mitnehmer (40) quer zur Schachtachse spielbehaftet ist.

15. Klappensteuerung nach einem der vorhergehenden Ansprüche, bei welcher das auf dem Schlitten (15) angeordnete Formschlusselement (75) für den Mitnehmer (40) einen in Einfahrrichtung des Ausfahrgerätes ein Dämpfungs- und/oder Federelement aufweist.

16. Klappensteuerung für ein Ausfahrgerät mit einem Schacht (8) tetragonförmigen Querschnitts nach einem der vorhergehenden Ansprüche, bei welcher an zwei gegenüberliegenden Seiten des Schachts (8) zwei Klappen (5) angelenkt sind, an den beiden anderen Seiten des Schachts (8) je ein Schlitten (15) im Schacht (8) geführt ist, beide Klappen (5) jeweils an beide Schlitten (15) angelenkt sind, jeder Schlitten (15) eine Kupplung für den Mitnehmer (40) aufweist und die Mitnehmer (40) auf zwei von einander abgewandten Seiten des Ausfahrgerätes angeordnet sind.

## Claims

1. A hatch control for an extension apparatus in a submarine with a shaft (8), in which the extension apparatus may be traversed in the longitudinal direction, with at least one slide (15) which is traversable in the longitudinal direction in the shaft (8) and which is coupled in movement to the extension apparatus along at least one shaft section, **characterized in that** at least one hatch (5) which is arranged at an outer end of the shaft (8) and which is articulated on at least one region which is stationary to the shaft (8), as well as on the slide (15), wherein the pivot axes (10, 16) are distanced to one another.

2. A hatch control according to claim 1, with which the hatch (5) is impinged by force in the opening direction, preferably by way of a spring element (20).

3. A hatch control according to one of the proceeding claims, with which a catch (40) is provided on the extension apparatus, and a coupling which may be brought into engagement with the catch (40), is provided on the slide (15).

4. A hatch control according to claim 3, with which the coupling comprises at least one control means (70) which is arranged on the shaft side.

5. A hatch control according to claim 4, with which the coupling comprises at least one coupling element (50) which is movably arranged on the slide (15) and on which a guide body (60) is arranged, and with which the shaft-side control means (70) is formed by the path guide (65) in which the guide body (60) runs.

6. A hatch control according to claim 4 or 5, with which the coupling, in a first position, is coupled in movement with a positive fit to the catch (40) moved outwards of the shaft, and with which the coupling, by way of the shaft-side control means (70), is transferred into a second position in which it releases the outwardly moved catch (40).

7. A hatch control according to claim 6, with which the coupling in the second position engages the catch (40) moved inwards of the shaft, by way of the shaft-side control means (70), and releases it in the first position.

8. A hatch control according to claim 7, with which the slide (15) comprises a positive-fit element (75) which, after engagement, is coupled in movement to the catch (40) in the inward travel direction.

9. A hatch control according to one of the preceding claims, with which the coupling preferably comprises two coupling elements in the form of pivotably arranged coupling jaws (50).

10. A hatch control according to one of the preceding claims, with which, given a decoupled slide (15), the coupling element or coupling elements (50) are impinged by force by at least one biasing element, preferably a spring element, in the direction of one of its two positions.

11. A hatch control according to one of the preceding claims, with which, given a decoupled slide (15), the coupling element or coupling elements (50) are impinged with force by a fixation element, preferably a further control means, in the direction of one of its two positions.

12. A hatch control according to one of the preceding claims, with which the at least one guide body (60) may be brought into positive-fit engagement with the shaft-side control means (70) in the second coupling position, and thereby fixes the slide in the shaft, wherein the positive-fit may be released by the transfer of the coupling from the second into the first coupling position.

13. A hatch control according to one of the preceding claims, with which the shaft (8) comprises at least one plane wall, on which the slide (15) runs between the shaft wall and the extension apparatus.

14. A hatch control according one of the preceding claims, with which the coupling, with regard to the catch (40), is provided with play transverse to the shaft axis.

15. A hatch control according to one of the preceding claims, with which the positive-fit element (75) arranged on the slide (15) has a damping element and/or spring element for the catch (40), said damping element and/or spring element acting in the retraction direction of the extension apparatus.

16. A hatch control for an extension apparatus with a shaft (8) of a tetragonal cross section according to one of the preceding claims, with which two hatches (5) are articulated on two opposite sides of the shaft (8), in each case a slide (15) is guided in the shaft (8) at the two other sides of the shaft (8), both hatches (5) in each case are arranged on both slides (15), each slide (15) comprises a coupling for the catch (40), and the catches (40) are arranged on two sides of the extension apparatus, which are distant to one another.

## Revendications

1. Commande de clapets pour un dispositif déployable dans un sous-marin, équipé d'une cheminée (8) dans laquelle le dispositif déployable est déplaçable en direction longitudinale, comprenant au moins un chariot (15) qui peut être déplacé en direction longitudinale dans la cheminée (8) et qui est couplé en mouvement avec le dispositif déployable le long d'au moins une partie de la cheminée, **caractérisée par** au moins un clapet (5) disposé à l'extrémité extérieure de la cheminée (8), qui est articulé à la fois sur au moins une région fixe en position par rapport à la cheminée (8) et sur le chariot (15), les axes de pivotement (10, 16) étant distants l'un de l'autre.

2. Commande de clapets selon la revendication 1, dans laquelle le clapet (5) est sollicité par force dans la direction d'ouverture, de préférence au moyen d'un élément ressort (20).

3. Commande de clapets selon l'une des revendications précédentes, dans laquelle sont prévus sur le dispositif déployable un entraîneur (40) et sur le chariot (15) un accouplement pouvant être mis en prise avec l'entraîneur (40).

4. Commande de clapets selon la revendication 3, dans laquelle l'accouplement présente au moins un moyen de commande (70) disposé côté cheminée.

5. Commande de clapets selon la revendication 4, dans laquelle l'accouplement présente au moins un élément d'accouplement (50) agencé de façon mobile sur le chariot (15), sur lequel est disposé un corps de guidage (60), et dans laquelle le moyen de commande (70) côté cheminée est formé par un guide de trajectoire (65) dans lequel se déplace le corps de guidage (60).

6. Commande de clapets selon la revendication 4 ou 5, dans laquelle l'accouplement est couplé en mouvement par complémentarité de forme, dans une première position, avec l'entraîneur (40) déplacé dans le sens de sortie de la cheminée, et dans laquelle l'accouplement est amené, via le moyen de commande (70) côté cheminée, dans une deuxième position dans laquelle il libère l'entraîneur (40) déplacé vers l'extérieur.

7. Commande de clapets selon la revendication 6, dans laquelle l'accouplement vient en prise, dans la deuxième position, avec l'entraîneur (40) déplacé dans le sens de rentrée dans la cheminée via le moyen de commande (70) côté cheminée, et le libère dans la première position.

8. Commande de clapets selon la revendication 7, dans laquelle le chariot (15) présente un élément à complémentarité de forme (75) qui est couplé en mouvement à l'entraîneur (40) dans la direction de rentrée après la mise en prise.

9. Commande de clapets selon l'une des revendications précédentes, dans laquelle l'accouplement présente, de préférence, deux éléments d'accouplement sous la forme de mâchoires d'accouplement (50) montées à pivotement.

10. Commande de clapets selon l'une des revendications précédentes, dans laquelle le ou les éléments d'accouplement (50) sont sollicités par force dans la direction de l'une de leurs deux positions à l'état désaccouplé du chariot (15) au moyen d'au moins un élément de précontrainte, de préférence un élément formant ressort.

11. Commande de clapets selon l'une des revendications précédentes, dans laquelle le ou les éléments d'accouplement (50) sont sollicités par force dans la direction de l'une de leurs deux positions à l'état désaccouplé du chariot (15) au moyen d'un élément de blocage, de préférence un autre moyen de commande.

12. Commande de clapets selon l'une des revendications précédentes, dans laquelle ledit corps de guidage (60), au moins au nombre de un, peut être mis en prise par complémentarité de forme dans la deuxième position d'accouplement avec le moyen de commande (70) côté cheminée et bloque ainsi le chariot dans la cheminée, la liaison par complémentarité de forme pouvant être supprimée par le passage de l'accouplement de la deuxième à la première position d'accouplement.

13. Commande de clapets selon l'une des revendications précédentes, dans laquelle la cheminée (8) présente au moins une paroi plane contre laquelle le chariot (15) se déplace entre la paroi de cheminée et le dispositif déployable.

14. Commande de clapets selon l'une des revendications précédentes, dans laquelle l'accouplement est soumis à un jeu par rapport à l'entraîneur (40) dans une direction transversale à l'axe de la cheminée.

15. Commande de clapets selon l'une des revendications précédentes, dans laquelle l'élément à complémentarité de forme (75) disposé sur le chariot (15) pour l'entraîneur (40) présente un élément d'amortissement et/ou formant ressort dans la direction de rentrée du dispositif déployable.

16. Commande de clapets destinée à un dispositif déployable, comprenant une cheminée (8) de section transversale tétragone selon l'une des revendications précédentes, dans laquelle deux clapets (5) sont articulés sur deux côtés opposés de la cheminée (8), un chariot (15) est respectivement guidé dans la cheminée (8) sur les deux autres côtés de la cheminée (8), les deux clapets (5) étant respectivement articulés sur les deux chariots (15), chaque chariot (15) présentant un accouplement pour l'entraîneur (40) et les entraîneurs (40) étant disposés sur deux côtés opposés du dispositif déployable.
